# EUROPÄISCHE PATENTANMELDUNG

(11) **EP 1 384 550 A1**
(43) Veröffentlichungstag der Anmeldung: **28.01.2004**
(21) Anmeldenummer: 03011816.0
(22) Anmeldetag: 26.05.2003
(51) Int. Cl.: B23K 26/02, B23K 26/24, B23K 37/02, B23K 37/04, B23K 15/00, B23K 10/02

(54) **Spann- und Schweissvorrichtung und Verfahren zum Schweissen von Blechen**

(30) Priorität: 24.07.2002 AT 11202002
(71) Anmelder: TMS Produktionssysteme GmbH, 4031 Linz (AT)
(72) Erfinder: Schupp, Gerhard, 86316 Friedberg (DE)
(74) Vertreter: VA TECH Patente GmbH & Co

(57) **Zusammenfassung**

Die vorliegende Erfindung zeigt eine Vorrichtung und eine Verfahren zum Spannen und Schweißen von aneinanderliegenden Blechen, wobei eine Schweißeinrichtung oder ein Schweißstrahl zum Schweißen einer Schweißnaht selbsttätig entlang einer Führung relativ zu den Spannelementen bewegbar ist.

## Beschreibung

Die vorliegende Erfindung offenbart eine Vorrichtung zum Spannen und Schweißen von aneinanderliegenden Blechen, bestehend aus einer Spanneinrichtung mit zumindest zwei zusammenwirkenden Spannelementen und zumindest einer Schweißeinrichtung, sowie ein zugehöriges Schweißverfahren und eine Schweißstation.

Zum Schweißen von Schweißnahtabschnitten in der Länge von einigen Zentimetern, insbesondere mittels Laserschweißverfahren, sind unterschiedliche Vorrichtungen und Methoden bekannt.

Einfache Spann- und Schweißvorrichtungen weisen Spannrollen auf, durch die die zu verschweißenden Bleche immer punktuell gespannt werden, wodurch die Spannkräfte konzentriert in die Bleche eingebracht werden und, vor allem bei größeren Schweißgeschwindigkeiten, die Bleche unter Umständen nach dem Schweißen etwas auseinander gehen könnten, was die Schweißnahtqualität erheblich reduzieren kann.

Andere Systeme spannen die Bleche entlang der Schweißnaht mittels einer Vielzahl von einzelnen Spanneinrichtungen, wobei zum Schweißen ein Schweißkopf z.B. auf einem Roboterarm entsprechend bewegt wird. Solche Schweißsysteme garantieren zwar eine sichere Verspannung der Bleche sind aber sehr aufwendig, teuer und unflexibel, da bei kleinen Änderungen der Schweißnähte, unter Umständen die gesamte Spanneinrichtung gewechselt werden muss.

Wiederum andere Vorrichtungen lassen eine gewisse Relativbewegung zwischen Spanneinrichtung und Schweißeinrichtung zu, wie z.B. aus der WO 00/41840 A1 bekannt. Bei dieser Vorrichtung wird eine Spann- und Schweißvorrichtung durch einen Roboter entsprechend positioniert, die zu verschweißenden Bleche durch die Spanneinrichtung gespannt und anschließend verschweißt, wobei der Schweißkopf durch den Roboter entlang einer Führung geführt wird. Die Relativbewegung wird also durch den Roboter selbst durchgeführt, d.h. das Schweißprogramm muss entsprechend gestaltet sein. Das Schweißprogramm muss somit auf die Führung der Spanneinrichtung abgestimmt sein, was bei Fertigungs- oder Positionsungenauigkeiten der Bleche und/oder des Schweißkopfes oder der Führungen zu Problemen führen kann. Durch die Bewegung des Schweißkopfes werden durch den Roboter in solchen Situationen über die Führungen zwangsweise neben den erwünschten Spannkräften noch zusätzliche Kräfte in die Bleche eingeleitet, die die Bleche unter Umständen verformen und in weiterer Folge zu ungenauen Schweißnähten führen kann. Darüber hinaus wird auch hier nur eine punktuelle Verspannung vorgesehen, wodurch es speziell bei längeren Schweißnähten in den Randbereichen der Schweißnaht zu einer unzulänglichen Verspannung kommen könnte, oder längere Schweißnähte überhaupt nicht geschweißt werden könnten.

Eine Aufgabe der Erfindung ist daher eine einfache, flexible Spann- und Schweißvorrichtung anzugeben, mit der sicher Schweißnahtabschnitte von bis zu einigen Zentimetern mit höher Qualität geschweißt werden können und die oben angeführten Nachteile beseitigt.

Diese Aufgabe wird durch die Vorrichtung dadurch gelöst, dass die Schweißeinrichtung an der Spanneinrichtung und/oder einem der Spannelemente befestigt-ist, wobei die Bleche durch die Spannelemente zumindest abschnittsweise spannbar sind und zum Schweißen einer Schweißnaht die Schweißeinrichtung selbsttätig entlang einer Führung und/oder ein von der Schweißeinrichtung ausgehender Schweißstrahl relativ zu den Spannelementen bewegbar ist. Das Verfahren löst diese Aufgabe wiederum, indem die Schweißeinrichtung selbsttätig entlang einer an der Spanneinrichtung angeordneten Führung und/oder ein von der Schweißeinrichtung ausgehender Schweißstrahl relativ zur Spannrichtung bewegt wird und dabei die Bleche miteinander verschweißt werden.

Dadurch dass die Schweißeinrichtung bzw. der Schweißstrahl zum Schweißen selbsttätig bewegt wird, kann das zugehörige Schweißprogramm sehr einfach gehalten werden, da es nur aus einfachen Positionsbefehlen besteht. Die Schweißbewegung wird durch die Schweißeinrichtung selbst ausgeführt.

Durch die Möglichkeiten der Gestaltung der Führung wird eine solche Vorrichtung darüber hinaus sehr flexibel und gewährleistet durch die zumindest abschnittsweise Spannung der Bleche eine sichere Verspannung der Bleche im Bereich der gewünschten Schweißnaht. Wird die Schweißbewegung nur durch den Schweißstrahl ausgeführt, so wird die Vorrichtung als Ganzes einfacher, da dann unter Umständen die Führung und der Antrieb der Schweißeinrichtung entfallen kann.

Sehr vorteilhaft und einfach wird ein Spannelement zum Ausüben einer Spannbewegung mittels eines Antriebes bewegt, der günstiger Weise ein kleiner, kompakter Servoantrieb ist.

Wenn der Antrieb mit einer Auswerteeinheit verbunden ist, die zum Erfassen der Spannkraft und/oder des Verfahrweges eines beweglichen Spannelementes ausgeführt ist, können die erfassten Messwerte einer weiteren Bearbeitung, wie z.B. einer Steuerung, einem Qualitätssicherungssystem, einer Fertigungsüberwachung, etc., weitergegeben werden. Damit kann der gesamte Arbeitsprozess verbessert, der Ausschuss verringert und die durchschnittlichen Durchlaufzeiten verringert werden.

Beispielsweise kann dadurch vorteilhaft ein vorgegebener Spalt zwischen den zu verschweißenden Blechen und/oder eine vorgegebene Spannkraft eingestellt werden, wodurch die Schweißnahtqualität durch Kontrolle eines wichtigen Schweißparameters, dem Schweißspalt, gewährleistet werden kann. Gleichfalls kann sehr einfach durch Auswertung der Spannkraft und/oder des Verfahrweges eines beweglichen Spannelementes die Blechdicke der zu verschweißenden Bleche ermittelt werden, was in einem Qualitätssicherungssystem zur Einhaltung einer vorgeschriebenen Qualität verwertet werden kann.

Eine ganz besonders vorteilhafte Ausgestaltung einer Spanneinrichtung ist ein Spannmodul in Form eines Spannarmes, vorzugsweise ein C- oder X-förmiger Spannarm, Eine solche Spanneinheit weist einen sehr einfachen kompakten Aufbau auf und kann darüber hinaus sehr einfach positioniert und angesteuert werden.

Die Positionierbarkeit der Spannelemente kann noch weiter verbessert werden, wenn eine Spannmodulausgleichseinheit vorgesehen wird, die eine besonders sichere Positionierung ermöglicht und zusätzlich noch die Steuerprogramme zur Bewegung der Spannelemente vereinfachen, da die Feinpositionierung der Spannelemente von der Spannmodulausgleichseinheit vorgenommen wird.

Eine besonders einfache Spannmodulausgleichseinheit ist eine schwimmende Lagerung des Spannmoduls.

Um den Vorteil der integrierten beweglichen Schweißeinheit voll ausnutzen zu können, werden die Spannelemente am besten so ausgeführt, dass sie die zu verschweißenden Bleche zumindest über die gesamte Länge der Schweißnaht spannen. Damit kann eine gleichmäßige Spannung der Bleche entlang der gesamten Schweißnaht erzielt werden, was die Qualität der Schweißnaht verbessert.

Die Schweißeinrichtung wird entlang der Führung besonders vorteilhaft mittels eines Servoantriebes bewegt, der klein einfach und kompakt ausgeführt werden kann, wodurch die Schweißeinrichtung selbst klein und leicht wird und damit nur kleine zusätzliche Massen bewegt werden müssen.

Die Schweißeinrichtung kann ganz besonders klein und kompakt ausgeführt werden, wenn ein Laser-, Elektronen- oder Plasmaschweißkopf verwendet wird, die darüber hinaus noch exzellente Schweißnahtqualitäten liefern.

Eine erfindungsgemäße Spann- und Schweißvorrichtung zum Spannen und Verschweißen der Bleche wird sehr vorteilhaft in einer Schweißstation verwendet, wobei die Spann- und Schweißvorrichtung auf einem Roboterarm oder alternativ auch auf einem Tisch bzw. Schlitten befestigt wird und von diesen im Raum positionierbar werden kann. Eine solche Schweißstation kann sehr günstig für das Schweißen von Fahrzeugkarosserieteilen eingesetzt werden.

Die Schweißnahtqualität wird verbessert und es entstehen gleichmäßige Schweißnähte, wenn der Antrieb der Schweißeinrichtung derart angesteuert wird, dass eine vorgegebene Schweißgeschwindigkeit eingehalten wird.

Entlang der Führung der Schweißeinrichtung werden vorteilhaft zumindest abschnittsweise durchgehende Schweißnähte geschweißt, da dann die Vorzüge der erfindungsgemäßen Spann- und Schweißvorrichtung ganz besonders gut ausgenutzt werden können.

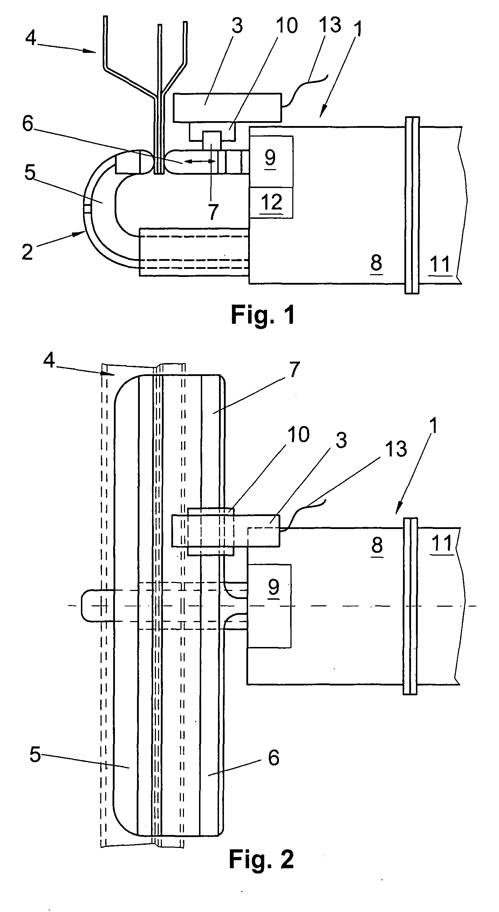

Eine erfindungsgemäße Spann- und Schweißvorrichtung wird nun anhand der beispielhaften, nicht einschränkenden Figuren 1 und 2 beschrieben, wobei die
Fig. 1 schematisch eine Aufsicht einer Spann- und Schweißvorrichtung,
Fig. 2 schematisch eine Draufsicht einer Spann- und Schweißvorrichtung,
Fig. 3 eine dreidimensionale Anordnung der Vorrichtung an einem Roboterarm und
Fig. 4 eine dreidimensionale Anordnung der Vorrichtung auf einem Schlitten.
zeigt.

In Fig. 1 und 2 ist schematisch und beispielhaft eine Spann- und Schweißvorrichtung 1 gezeigt, die in diesem Ausführungsbeispiel im Wesentlichen aus einem C-förmigen Spannarm 2 als Spanneinrichtung und einer daran befestigten Schweißeinrichtung 3 besteht. Der Spannarm 2 wird aus einem Spannmodul 8, sowie einem festen 5 und einem. beweglichen Spannelement 6 gebildet. Das bewegliche Spannelement 6, die Spannrichtung ist durch die beiden Pfeile angedeutet, wird durch einen Antrieb 9, z.B. ein Servoantrieb, bewegt, sodass im Zusammenwirken des festen 5 und des beweglichen Spannelementes 6 Bleche 4, in diesem Beispiel drei Bleche, was natürlich keine Einschränkung darstellt, gespannt werden können. Der Spannarm 2 ist hier am Spannmodul 8 an einen Roboterarm 11 angeflanscht und kann durch den Roboter im Bereich der Reichweite des Roboterarmes 11 beliebig im Raum positioniert werden.
Am beweglichen Spannelement 6 ist hier quer zur Spannrichtung eine Führung 7 angebracht, entlang der eine Schweißeinrichtung 3, beispielsweise ein Laser- oder Plasmaschweißkopf, geführt und relativ zur Spannrichtung bewegt werden kann. Die Schweißeinrichtung 3 wird dabei selbsttätig mittels eines eigenen Schweißantriebes 10, wie z.B. ein Servoantrieb, bewegt. Die Breite der Spannelemente 5, 6 bzw. der Führung 7 geben dabei die maximal erreichbare Schweißnahtlänge vor. Die Spannelemente 5, 6 sind dabei wie in der Fig. 1 und 2 gezeigt vorzugsweise so ausgeführt, dass sie die zu verschweißenden Bleche 4 entlang der gesamten Schweißnahtlänge spannen.

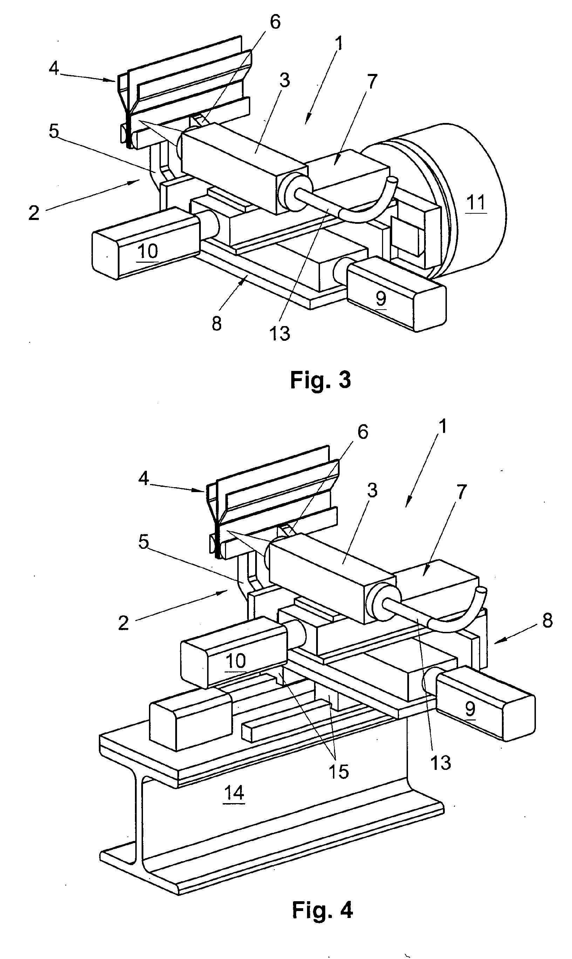

Eine Spann- und Schweißvorrichtung 1 wie oben beschrieben ist auch in Fig. 3 in einer dreidimensionalen Ansicht dargestellt.

Im Folgenden wird nun beispielhaft ein typischer Schweißvorgang beschrieben:
Der Spannarm 2 wird durch den Roboterarm 11 so positioniert, dass das feste Spannelement 5 die zu verschweißenden Bleche 4 kontaktiert, bzw. in ausreichender Nähe zu den Blechen 4 zu liegen kommt. Nun wird mittels des Servoantriebes 9 das bewegliche Spannelement 6 in Richtung der Bleche 4 bewegt bis die Bleche 4 ausreichend gespannt sind. Daraufhin wird die Schweißeinrichtung 3 aktiviert, die nun mittels des Schweißantriebes 10 entlang der Führung 7 bewegt wird, wodurch eine Schweißnaht gesetzt wird und die Bleche 4 verschweißt werden. Der Spannarm 2 wird während des Schweißvorganges vorzugsweise ruhig gehalten. Nachdem die Bleche 4 verschweißt wurden, wird der Spannarm 2 geöffnet, indem das bewegliche Spannelement 6 von den Blechen 4 wegbewegt wird und die Spannund Schweißvorrichtung 1 kann mittels des Roboters zur nächsten Schweißstelle bewegt werden, wo sich dieser Vorgang wiederholt,
Mit einer solchen Spann- und Schweißvorrichtung 1 lassen sich Schweißnahtabschnitte von einigen Millimetern bis einigen Zentimetern, je nach Länge der Führung 7, problemlos schweißen, wobei auch die Schweißgeschwindigkeit über den Schweißantrieb 10 sehr einfach einstellbar ist.
Die Schweißeinrichtung 3 muss nach dem Schweißen einer Schweißnaht nicht unbedingt wieder zurück in eine definiert Ausgangsposition gebracht werden, sondern es könnte die nächste Schweißnaht einfach in die entgegengesetzte Richtung geschweißt werden, was die Taktzeit erhöhen kann.

Es wäre aber natürlich auch denkbar, entlang der geführten Kurve keine durchgehende Schweißnaht zu schweißen, sondern eine beliebig unterbrochene Schweißnaht zu setzen oder sogar nur eine Anzahl von Punktschweißungen nebeneinander zu setzen. Dazu könnte die Schweißeinrichtung 3 entsprechend angesteuert werden, beispielsweise gekoppelt an die Robotersteuerung, um an den richtigen Stellen die entsprechenden Ein/Aus Befehle geben zu können.

Eine erfindungsgemäße Spann- und Schweißvorrichtung 1 kann weiters auch mit einer Auswerteeinheit 12 ausgestattet sein. In dem Ausführungsbeispiel nach Fig. 1 ist eine solche Auswerteeinheit im Spannmodul 8 untergebracht. Die Auswerteeinheit 12 kann beispielsweise dazu verwendet werden, die Spannkraft und/oder den Verfahrweg des beweglichen Spannelementes 12 zu erfassen und auszuwerten. Damit lässt sich z.B. eine Überwachungsfunktion im Sinne einer Qualitätssicherung, oder eine kontrollierte Verspannung der Bleche 4 erreichen.
Es könnte z.B. der Servoantrieb 9 durch die Auswerteeinheit 12 so angesteuert werden, dass die Spannkraft proportional aufgebaut wird und/oder dass zum Zinkentgasen ein vorgegebener Spalt zwischen verzinkten Blechen eingestellt wird. Für das Laserschweißen von verzinkten Blechen wird z.B. typischerweise ein Spalt von 0,2 mm benötigt. Weiters könnte anhand der Spannkraft und/oder des Verfahrweges auch die Blechdicke kontrolliert und einem Qualitätssicherungssystem zugeführt werden.

Als Schweißeinrichtung 3 lässt sich sehr günstig ein Laser-, Elektronen- oder Plasmaschweißkopf verwenden, da diese sehr klein und kompakt ausgeführt werden können, wodurch nur sehr geringe Massen bewegt werden müssen.

Die Schweißeinrichtung 3 könnte natürlich genauso am Spannmodul 8 angebracht werden, wobei dann eine Möglichkeit der Fokussierung des Schweißstrahles bestehen sollte, um ein bestmögliches Schweißergebnis zu erreichen. Dazu könnte eine Fokussiereinrichtung beispielsweise am beweglichen Spannelement 6 angebracht werden, sodass immer die optimale Fokussierung eingestellt wird.

Ebenfalls denkbar und im Rahmen der Erfindung möglich wäre es, die Scheißeinrichtung 3 fix am beweglichen Spannelement 6 oder Spannmodul 8 anzubringen und die Relativbewegung zum Schweißen durch eine Bewegung des Schweißstrahles zu erzielen. Dazu könnte z.B. in die Schweißeinrichtung 3 eine Optik, oder eine andere für das jeweilige Schweißverfahren geeignete Einrichtung, wie z.B. eine bewegliche Düse oder ähnliches, integriert werden, die eine Bewegung des Laserstrahles ermöglicht. Eine solche Möglichkeit zur direkten Bewegung des Schweißstrahles könnte auch in Kombination mit einer beweglichen Schweißeinrichtung 3 vorgesehen werden.

Die Versorgung der Schweißeinrichtung 3 mit den zum Schweißen erforderlichen Medien, wie ein Schweißgas, ein Kühlmedium, elektrischer Strom für den Antrieb oder ein Laserstrahl, kann dabei auf vielfältigste Weise zur Verfügung gestellt werden. Die Versorgung könnte beispielsweise durch eine externe Zuleitung 13 zur Schweißeinrichtung 3 sichergestellt werden, könnte aber genauso über den Roboter und einem Spannelement zugeführt werden. Die Möglichkeiten der Ausgestaltung der Zuführung sind hinlänglich bekannt und sind nicht wesentliches Merkmal der Erfindung.

Außerdem kommen natürlich auch noch andere Spanneinrichtungen wie ein C-förmiger Spannarm 2 in Frage. Es könnte äquivalent z.B. ein X-förmiger Spannarm vorgesehen werden.
Gleichfalls wäre es auch denkbar beide Spannelemente beweglich auszuführen oder eine Spannmodulausgleichseinheit, wie sie von Schweißzangen her hinlänglich bekannt ist (z.B. aus der österreichischen Patentanmeldung AT 905/01), vorzusehen. Eine sehr einfache Spannmodulausgleichseinheit könnte durch eine schwimmende Lagerung, z.B. eine Führung zwischen Spannmodul 8 und Roboterarm 11, des Spannmoduls 8 erzielt werden, bei der die Lagerung z.B. eine gewisse Bewegung in Spannrichtung erlaubt. Damit würde der Spannarm 2 nach einem erfolgten Kontakt zwischen festem Spannelement 5 und den Blechen 4 die Position halten und eine darüber hinaus gehende Bewegung des Roboterarmes 11 von der schwimmenden Lagerung ausgeglichen werden.

Die Spann- und Schweißvorrichtung 1 könnte anstelle eines Roboters auch auf einem Tisch oder einem Schlitten befestigt sein, wobei sich an der Funktion der Spann- und Schweißvorrichtung 1 natürlich nichts ändern würde. Die Fig. 4 zeigt beispielhaft eine solche Anordnung. Dabei ist der Spannmodul 8 auf einem Schlitten 15 befestigt, der hier eine gewisse Bewegung in einer Richtung gestattet. Andere Anordnungen, vor allem solche mit Schlitten, die eine Bewegung in mehrere Richtungen ermöglichen, sind natürlich ebenso denkbar. Der Schlitten 15 ist in diesem Beispiel auf einem Tisch 14, hier in Form eines l-Trägers, angeordnet.

Durch eine entsprechende Gestalt der Führung 7 lassen sich natürlich auch andere Nähte wie einfache Linearnähte schweißen, z.B. wäre eine kreisbogenförmige oder eine beliebig kurvige oder schräge Naht denkbar.
Gleichfalls könnte die Schweißeinrichtung 3 durch entsprechende Antriebe auch in weiteren Richtungen selbsttätig bewegbar sein, wodurch sich ebenfalls zusätzlich Freiheitsgrade in der Gestaltung der Schweißnähte ergeben würden.

## Patentansprüche

1. Vorrichtung zum Spannen und Schweißen von aneinanderliegenden Blechen, bestehend aus einer Spanneinrichtung mit zumindest zwei zusammenwirkenden Spannelementen (5, 6), wobei die Bleche (4) durch die Spannelemente (5, 6) zumindest abschnittsweise spannbar sind, und zumindest einer Schweißeinrichtung (3), **dadurch gekennzeichnet, dass** die Schweißeinrichtung (3) an der Spanneinrichtung und/oder einem der Spannelemente (5, 6) befestigt ist und dass zum Schweißen einer Schweißnaht die Schweißeinrichtung (3) selbsttätig entlang einer Führung und/oder ein von der Schweißeinrichtung (3) ausgehender Schweißstrahl selbsttätig relativ zu den Spannelementen (5, 6) bewegbar ist.

2. Vorrichtung nach Anspruch 1, **dadurch gekennzeichnet, dass** an der Spanneinrichtung ein Antrieb (9) vorgesehen ist, mittels dem zumindest ein bewegbares Spannelement (6) zum Ausüben einer Spannbewegung bewegbar ist.

3. Vorrichtung nach Anspruch 2, **dadurch gekennzeichnet, dass** der Antrieb (9) ein Servoantrieb ist.

4. Vorrichtung nach Anspruch 2 oder 3, **dadurch gekennzeichnet, dass** der Antrieb (9) mit einer Auswerteeinheit (12) verbunden ist, die zum Erfassen der Spannkraft und/oder des Verfahrweges eines bewegbaren Spannelementes (6) ausgeführt ist.

5. Vorrichtung nach Anspruch 4, **dadurch gekennzeichnet, dass** mittels der Auswerteeinheit (12) durch Ansteuerung des Antriebes (9) ein vorgegebener Spalt zwischen den zu verschweißenden Blechen (4) und/oder eine vorgegebene Spannkraft einstellbar ist.

6. Vorrichtung nach Anspruch 4 oder 5, **dadurch gekennzeichnet, dass** mittels der Auswerteeinheit (12) durch Auswertung der Spannkraft und/oder des Verfahrweges eines bewegbaren Spannelementes (6) die Blechdicke der zu verschweißenden Bleche (4) ermittelbar ist.

7. Vorrichtung nach einem der Ansprüche 1 bis 6, **dadurch gekennzeichnet, dass** die Spanneinrichtung als Spannarm (2), vorzugsweise ein C- oder X-förmiger Spannarm, ausgeführt ist.

8. Vorrichtung nach einem der Ansprüche 1 bis 7, **dadurch gekennzeichnet, dass** zumindest ein Spannelement (5, 6), vorzugsweise gleichzeitig alle Spannelemente einer Spanneinrichtung, durch eine Spannmodulausgleichseinheit bewegbar ist.

9. Vorrichtung nach Anspruch 8, **dadurch gekennzeichnet, dass** die Spannmodulausgleichseinheit als schwimmende Lagerung des Spannarm (2) ausgeführt ist.

10. Vorrichtung nach einem der Ansprüche 1 bis 9, **dadurch gekennzeichnet, dass** die Spannelemente (5, 6) die zu verschweißenden Bleche (4) zumindest über die gesamte Länge der Schweißnaht spannen.

11. Vorrichtung nach einem der Ansprüche 1 bis 10, **dadurch gekennzeichnet, dass** die Führung (7) der Schweißeinrichtung (3) im Wesentlichen quer zur Spannrichtung ausgerichtet ist.

12. Vorrichtung nach einem der Ansprüche 1 bis 11, **dadurch gekennzeichnet, dass** die Schweißeinrichtung (3) entlang der Führung (7) mittels eines Antriebes (10), vorzugsweise ein Servoantrieb, bewegbar ist.

13. Vorrichtung nach einem der Ansprüche 1 bis 12, **dadurch gekennzeichnet, dass** die Schweißeinrichtung (3) ein Laser-, Plasma- oder Elektronenstrahlschweißkopf ist.

14. Vorrichtung nach Anspruch 13, **dadurch gekennzeichnet, dass** ein Laserstrahl durch eine, vorzugsweise in der Schweißeinrichtung (3) integrierten, Optik relativ zu den Spannelementen bewegbar ist.

15. Vorrichtung nach Anspruch 13, **dadurch gekennzeichnet, dass** ein Plasma- oder Elektronenstrahl durch eine in der Schweißeinrichtung (3) integrierten beweglichen Strahlaustrittseinrichtung, vorzugsweise eine Düse, relativ zu den Spannelementen bewegbar ist.

16. Schweißstation zum Schweißen von Blechen mit zumindest einer Spann- und Schweißvorrichtung (1) zum Spannen und Verschweißen der Bleche (4), wobei die Spannund Schweißvorrichtung (1) nach einem der Ansprüche 1 bis 15 ausgeführt ist.

17. Schweißstation nach Anspruch 16, **dadurch gekennzeichnet, dass** die Spann- und Schweißvorrichtung (1) auf einem Roboterarm (11) befestigt und durch diesen im Raum positionierbar ist.

18. Schweißstation nach Anspruch 16, **dadurch gekennzeichnet, dass** die Spann- und Schweißvorrichtung (1) auf einem Tisch (14) bzw. Schlitten (15) befestigt und durch diesen im Raum positionierbar ist.

19. Schweißstation nach Anspruch 16, 17 oder 18, **dadurch gekennzeichnet, dass** Fahrzeugkarosserieteile verschweißbar sind.

20. Verfahren zum Spannen und Schweißen von aneinanderliegenden Blechen, wobei die Bleche (4) durch Spannelemente (5, 6) gespannt und von einer Schweißeinrichtung (3) verschweißt werden, **dadurch gekennzeichnet, dass** die Schweißeinrichtung (3) selbsttätig entlang einer Führung (7) und/oder ein von der Schweißeinrichtung (3) ausgehender Schweißstrahl selbsttätig relativ zur Spannrichtung bewegt wird und dabei die Bleche (4) miteinander verschweißt werden.

21. Verfahren nach Anspruch 20, **dadurch gekennzeichnet, dass** eine vorgegebene Schweißgeschwindigkeit eingehalten wird.

22. Verfahren nach Anspruch 20 oder 21, **dadurch gekennzeichnet, dass** eine zumindest abschnittsweise durchgehende Schweißnaht geschweißt wird.

23. Verfahren nach einem der Ansprüche 20 bis 22, **dadurch gekennzeichnet, dass** beim Spannen der Bleche (4) ein vorgegebener Spalt zwischen den Blechen (4) und/oder eine vorgegebene Schweißkraft eingestellt wird.

24. Verfahren nach einem der Ansprüche 20 bis 23, **dadurch gekennzeichnet, dass** ein von der Schweißeinrichtung ausgehender Laserstrahl durch eine Optik relativ zur Spannrichtung bewegt wird.

25. Verfahren nach einem der Ansprüche 20 bis 24, **dadurch gekennzeichnet, dass** ein von der Schweißeinrichtung (3) ausgehender Plasma- oder Elektronenstrahl durch eine bewegliche Strahlaustrittseinrichtung relativ zur Spannrichtung bewegt wird.
